# EUROPEAN PATENT SPECIFICATION

(11) **EP 1 741 744 B1**
(45) Date of publication and mention of the grant of the patent: **21.06.2017**
(21) Application number: 06013433.5
(22) Date of filing: 12.01.2001
(51) Int. Cl.: C08J 9/12, C08L 25/04, C08L 23/02, B29C 44/56

(54) **A process for producing thermoformable foam sheet using a physical blowing agent**
Verfahren zur Herstellung einer thermoformbaren Schaumstofffolie mittels eines physischen Treibmittels
Procédé de préparation d'une plaque de mousse thermoformable, utilisant un agent d'expansion physique.

(30) Priority: 04.02.2000 US 180446 P
(43) Date of publication of application: 10.01.2007
(62) Divisional of application: 01902062.7
(73) Proprietor: Dow Global Technologies LLC, Midland, MI 48674 (US)
(72) Inventor: Welsh, Gary, C., Midland, MI 48642 (US); Salmang, Roldolfo, J., 4532 JB Terneuzen (NL); Ballot, Michael, M., 4535 JC Terneuzen (NL)
(74) Representative: Beck Greener

(56) References cited:
- EP-A- 0 667 234
- GB-A- 842 369
- GB-A- 1 264 852
- GB-A- 1 411 132
- GB-A- 2 263 435
- US-A- 3 871 897
- US-A- 5 286 428
- US-A- 5 342 560

## Description

The present invention relates to a thermoplastic foam sheet produced using a physical blowing agent such as carbon dioxide, water and/or nitrogen.

Styrenic and olefinic polymers have been utilized in food packaging applications such as non-foamed thermoformable sheet used in dairy containers. This type of thermoformable sheet has been typically produced using a conventional sheet extrusion line, wherein the polymer is extruded from a flat sheet die onto a three-roll polishing stack and either wound or fed directly into a thermoforming process. However, ecological influences are driving the food packaging industry to produce lighter packaging materials, due to the fees based on packaging weight which are applied to packaged food processors.

One way to reduce the weight of a thermoformable sheet is to incorporate a blowing agent to produce a high density foam sheet. Foam sheet of this type is typically produced using a conventional sheet extrusion line and a chemical blowing agent. However, chemical blowing agents are expensive and do not provide consistent or uniform foaming, resulting in foam gauge and density variation within the foam sheet produced.

Therefore, there remains a need for a process of producing high density foamed packaging materials, particularly thermoformable foam sheet having consistent gauge and density, which can be used in traditional non-foam applications such as dairy containers. GB842,369 discloses a process for producing a shaped, foamed thermoplastic body. GB1,264,852 discloses a process for producing a flat sheet of a foamed thermoplastic synthetic resin using a slit die orifice.

The present invention is a a thermoplastic foam sheet obtainable by contacting a molten monovinylidene aromatic or olefinic polymer with a physical blowing agent selected from carbon dioxide, nitrogen, water or a combination thereof, to form a polymer/blowing agent mixture, foaming the mixture into a region of lower pressure to form a foaming extrudate, pulling and compressing the foaming extrudate to form a foam sheet having a uniform thickness of less than 3 mm, wherein the uniform thickness differs from the average sheet thickness by less than 6 percent at any point.

The present invention also includes thermoformed articles produced therefrom.

The present invention is especially suited for producing high density foamed packaging materials, particularly thermoformable foam sheet having consistent gauge and density, which can be used in traditional non-foam thermoformed applications such as dairy containers.

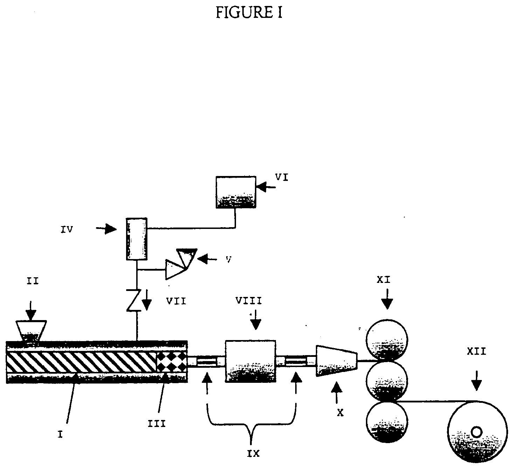

Figure 1 is a schematic representation of one embodiment of a sheet extrusion line used in the process of the present invention. Resin and optional nucleator (II) is fed into the extruder (I) having a mixing head (III), static mixers (IX), gear pump (VIII) and die (X), wherein a physical blowing agent, from a storage tank (VI) connected to a positive displacement pump (IV) having a relief device (V), is injected through the injection valve (VII) of the extruder. The foam sheet is pulled and compressed into the 3-roll polishing stack (XI) and wound to form a bolt of foamed sheet (XII).

Thermoplastic polymers useful in the present invention include polyolefins such as polyethylene, polypropylene, linear low density polyethylene, low density polyethylene, high density polyethylene, olefinic copolymers such as ethylene-octene copolymers: polymers, copolymers and interpolymers having at least 70 percent by weight vinyl aromatic monomer incorporated into the final resin as the monomeric repeat units. Vinyl aromatic monomers include, but are not limited to those described in U.S. Patents 4,666,987, 4,572,819 and 4,585,825. Preferably, the monomer is of the formula: 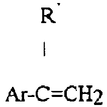 wherein R is hydrogen or methyl, Ar is an aromatic ring structure having from 1 to 3 aromatic rings with or without alkyl, halo, or haloalkyl substitution, wherein any alkyl group contains 1 to 6 carbon atoms and haloalkyl refers to a halo substituted alkyl group. Preferably, Ar is phenyl or alkylphenyl, wherein alkylphenyl refers to an alkyl substituted phenyl group, with phenyl being most preferred. Typical vinyl aromatic monomers which can be used include: styrene, alpha-methylstyrene, all isomers of vinyl toluene, especially paravinyltoluene, all isomers of ethyl styrene, propyl styrene, vinyl biphenyl, vinyl naphthalene, vinyl anthracene, and mixtures thereof. The vinyl aromatic monomers may also be combined with other copolymerizable monomers. Examples of such monomers include, but are not limited to acrylic monomers such as acrylonitrile, methacrylonitrile, methacrylic acid, methyl methacrylate, acrylic acid, and methyl acrylate; maleimide, phenylmaleimide, and maleic anhydride. In addition, the polymerization of the vinyl aromatic monomer may be conducted in the presence of predissolved elastomer to prepare impact modified, or grafted rubber containing products, examples of which are described in U.S. Patent Nos. 3,123,655, 3,346,520, 3,639,522,
and 4,409,369. Specifically, the polymer
can be a high impact polystyrene resin. Additionally, the process of the present invention can utilize blends or combinations of any of the polymers mentioned above.

The blowing agent to be used in the process of the present invention includes any physical blowing agent selected from carbon dioxide (CO₂), nitrogen (N₂), water (H₂O) or combinations thereof. For the purposes of this specification, such physical blowing agent shall be defined as substantially 100 percent physical blowing agent, in the absence of a chemical blowing agent, even though the physical blowing agent may contain minor impurities or minor amounts of other compounds. Preferably, the blowing agent is 100 percent carbon dioxide.

The physical blowing agent can be in any form and is preferably a gas or liquid. Carbon dioxide is preferably added to a polymer melt as a liquid, although use of the carbon dioxide gas would also be acceptable in the practice of the present invention. Nitrogen is preferably added to a polymer melt as a gas, while water is typically added as a liquid, although any form is acceptable. Typically, in cases of blowing agent combinations or mixtures, separate metering systems are utilized, wherein multiple streams meet prior to the injection point of the cast-extrusion process. However, the blowing agents can also be previously mixed and injected using a single metering system.

Additives, such as pigments and/or nucleating agents, may also be used in the process of the present invention. The addition of a nucleating agent is generally preferred and it is preferably added in an amount of from 0.001 to 10 percent of the total polymer by weight. More preferably the amount of nucleating agent is between 0.02 to 2 percent. The nucleating agent is typically added with the polymer in the extruder. In one embodiment, the nucleating agent is talc.

The process for producing the present invention can also utilize coextrusion capabilities to produce multi-layer foam sheets. These multi-layer sheets can comprise one or more foamed core layers or foamed skin layers if desirable. In some applications, it may be desirable to have a combination of one or more foamed core layers or skin layers with non-foamed core layers or skin layers as well. For example, in one embodiment, a multilayer coextruded sheet comprises a foamed polystyrene core layer having outer skin layers comprising a non-foamed high impact polystyrene or a non-foamed blend of a polystyrene resin with a high impact polystyrene resin. Methods of coextruding are well known in the art.

Sheet extrusion is well known in the art and described in F. Hensen, Plastics Extrusion Technology, Hanser Publishers, New York, 1988. Chapter 7, pages 203-251 and in Modem Plastics Mid-October 1989 Encyclopedia Issue, Volume 66, Number 11, pages 256-257.

A sheet extrusion process used in the process of the present invention comprises feeding and melting a polymer in a sheet extruder, wherein the melt travels to an optional feedblock and through a die to form a monolayer or multilayer extrudate (sheet) of uniform thickness at the die exit. The foaming temperature at the die in the process of the present invention, is dependent upon the polymer being foamed and is typically greater than 150°C and is preferably between 170 and 300°C. The polymer/blowing agent mixture is extruded and foamed into a zone of lower pressure preferably air at atmospheric pressure. The extruded foam sheet is drawn into a mechanism for pulling and compressing the foaming extrudate such that uniform thickness of the sheet is obtained. One such mechanism includes a rotating, temperature controlled 3-roll polishing stack. In this embodiment, the gauge of the sheet is determined by the extrusion rate, roll stack gap, line speed, and draw ratio. The roll stack gap is the clearance between the top and middle roll of the 3-roll polishing stack when using down stack configuration. The draw ratio is the ratio of the speed of the melt at the die exit to the speed of the 3-roll polishing stack. The gauge of the sheet is monitored by an instrument mounted on a carriage that moves perpendicular to the sheet direction, carrying the gauge instrument across the sheet. Such gauge instruments are well known in the art. The sheet exits the gauging station and moves over a series of guide rollers to the optional slitting station and onto a winder or directly into a thermoforming process.

The process for producing the present invention is further characterized in that the physical blowing agent is introduced into the polymer melt at a location prior to the die of the sheet extruder. Preferably, the blowing agent is injected through a one way valve located at the decompression zone (vent port) of the extrusion screw within the sheet extrusion line. Optionally, a static mixer may be provided prior to the die to mix the polymer with the blowing agent(s) and nucleating agent, if utilized. The foaming occurs in a region of lower pressure just prior to the die exit and continues once the polymer melt mixture exits from the die. Typically, sheet extrusion processes are utilized to extrude non-foamed materials or chemically blown high density foam sheet. It has been discovered that by utilizing a
physical blowing agent and a sheet extrusion line as described, a high density foam sheet can be obtained having improved gauge and density uniformity.

The foam sheet produced will typically have a density in the range of 25 to 65 pounds per cubic foot (PCF) (400-1050 grams/liter (g/L)) preferably from 45 to 55 PCF (725-890 (g/L)), and 0.04 to 1 weight percent, preferably 0.04 to 0.5 weight percent of physical blowing agent, is used based on the weight of polymer. It should be noted that when water is used in the process of the present invention in amounts less than 0.2 weight percent based on the weight of the polymer, water acts as a coolant and does not provide expansion of the polymer. The cooling effect is advantageous in controlling the expansion rate of the foaming structure. In amounts greater than 0.2 weight percent water, increased expansion of the polymer melt mixture is observed. Cell sizes of the foamed sheet in all directions are less than 1 millimeter (mm), and preferably less than 0.5 mm. The thickness of the foam sheet is less than 3 mm and preferably from 0.1 mm to 3 mm.

The foam sheet produced has improved gauge and density uniformity. Uniform gauge can be determined by comparing the thickness of the finished sheet at any location to the average finished sheet thickness. The two thicknesses, when compared will have a difference of less than 6 percent. Uniform density can be determined by comparing the density of the finished sheet at any location to the average sheet density. The two densities, when compared will have a difference of less than 4 percent. In other words, any gauge measured on the finished sheet will not differ by more than 6 percent from the average sheet gauge and any density measured on the finished sheet will not differ by more than 4 percent from the average finished sheet density.

The following examples are provided to illustrate the present invention. The examples are not intended to limit the scope of the present invention and they should not be so interpreted. Amounts are in weight percentages unless otherwise indicated.

### Examples

### Example I

A general purpose polystyrene resin, having a Mw of 320,000 is fed into a sheet coextrusion line having a high pressure piston pump at the vent port location, wherein 100percent CO₂ is metered into the extrusion barrel as a blowing agent. The end of the extruder is also equipped with static mixers to improve the mixing of the polymer/blowing agent mixture. Simultaneously, a 50/50 blend of the polystyrene resin with an impact modified polystyrene resin is fed into another sheet extrusion line without blowing agent, for production of the
coextruded solid skin layers. The polystyrene resin is foamed and coextruded with the non-foamed polystyrene/HIPS blend to form a sheet having a foamed core resin with two solid skin layers adhered to both sides of the core resin layer. The sheet is pulled and compressed by a 3-roll polishing stack. Process conditions and sheet properties are given below:

| Parameter | Value |
|---|---|
| CO₂ (Weight percent) | 0.1 |
| nucleating agent (talc) (ppm) | 1000 |
| Die foaming temperature, (°C) | 200 |
| Sheet core density, (g/cc) | 0.62 |
| Overall sheet density, (g/cc) | 0.83 |
| Overall sheet gauge,(mm) | 1.4 |
| Overall sheet weight reduction, (percent) | 20 |
| Individual skin layer gauge(mm) | 0.35 |

## Claims

1. A thermoplastic foam sheet obtainable by:
contacting a molten monovinylidene aromatic or olefinic polymer with a physical blowing agent selected from carbon dioxide, nitrogen, water or a combination thereof, to form a polymer/blowing agent mixture within a sheet extrusion line; foaming the mixture into a region of lower pressure to form a foaming extrudate; and pulling and compressing the foaming extrudate to form a foam sheet; the foam sheet having a density from 400 to 1050 g/L and a uniform thickness of less than 3 mm, wherein the uniform thickness differs from the average sheet thickness by less than 6 percent at any point.

2. The thermoplastic foam sheet of Claim 1 wherein a molten monovinylidene aromatic polymer is used.

3. The thermoplastic foam sheet of Claim 1 wherein the molten monovinylidene aromatic polymer comprises a vinyl aromatic polymer.

4. The thermoplastic foam sheet of Claim 1 wherein a molten olefinic polymer is used.

5. The thermoplastic foam sheet of Claim 3 or Claim 4 wherein the molten olefinic polymer comprises a polyethylene, polypropylene, linear low density polyethylene, low density polyethylene, high density polyethylene, an ethylene-octene copolymer, or an olefinic copolymer or interpolymer having at least 70 percent by weight vinyl aromatic monomer incorporated into the final resin as the monomeric repeat units.

6. The thermoplastic foam sheet of Claim 5 wherein the molten olefinic polymer comprises polypropylene.

7. The thermoplastic foam sheet of Claim 5 wherein the molten olefinic polymer comprises polyethylene.

8. The thermoplastic foam sheet of Claim 1 wherein the density of the foam is from 725 to 890 g/L.

9. The thermoplastic foam sheet of any one of Claims 1 to 8 having more than one coextruded layer.

10. The thermoplastic foam sheet of Claim 1 , wherein the sheet is a coextruded multilayer foam sheet comprising a foam layer and at least one non-foam polymer skin layer.

11. The coextruded multilayer foam sheet of Claim 10, wherein the foam layer comprises foamed polystyrene and the non-foam polymer skin layer comprises a blend of a polystyrene resin with a high impact polystyrene resin.

12. A thermoformed article produced from the foam sheet of any one of Claims 8 to 11.

## Patentansprüche

1. Eine Bahn aus thermoplastischem Schaumstoff, erhältlich durch:
In-Kontakt-Bringen eines geschmolzenen monovinylidenaromatischen oder olefinischen Polymers mit einem physikalischen Treibmittel, ausgewählt aus Kohlendioxid, Stickstoff, Wasser oder einer Kombination davon, zum Bilden einer Polymer-Treibmittel-Mischung innerhalb einer Bahnextrusionsanlage; Aufschäumen der Mischung in einen Bereich niedrigeren Drucks zum Bilden eines schäumenden Extrudats; und Ziehen und
Komprimieren des schäumenden Extrudats zum Bilden einer Schaumstoffbahn; wobei die Schaumstoffbahn eine Dichte von 400 bis 1050 g/l und eine einheitliche Dicke von weniger als 3 mm aufweist, wobei sich die einheitliche Dicke an jedem beliebigen Punkt von der durchschnittlichen Bahndicke um weniger als 6 Prozent unterscheidet.

2. Bahn aus thermoplastischem Schaumstoff gemäß Anspruch 1, wobei ein geschmolzenes monovinylidenaromatisches Polymer verwendet wird.

3. Bahn aus thermoplastischem Schaumstoff gemäß Anspruch 1, wobei das geschmolzene monovinylidenaromatische Polymer ein vinylaromatisches Polymer beinhaltet.

4. Bahn aus thermoplastischem Schaumstoff gemäß Anspruch 1, wobei ein geschmolzenes olefinisches Polymer verwendet wird.

5. Bahn aus thermoplastischem Schaumstoff gemäß Anspruch 3 oder Anspruch 4, wobei das geschmolzene olefinische Polymer ein Polyethylen, Polypropylen, lineares Polyethylen niederer Dichte, Polyethylen niederer Dichte, Polyethylen hoher Dichte, ein Ethylen-Octen-Copolymer oder ein olefinisches Copolymer oder Mischpolymer mit mindestens 70 Gewichtsprozent vinylaromatischem Monomer, das als monomere Wiederholungseinheiten in das endgültige Harz inkorporiert ist, beinhaltet.

6. Bahn aus thermoplastischem Schaumstoff gemäß Anspruch 5, wobei das geschmolzene olefinische Polymer Polypropylen beinhaltet.

7. Bahn aus thermoplastischem Schaumstoff gemäß Anspruch 5, wobei das geschmolzene olefinische Polymer Polyethylen beinhaltet.

8. Bahn aus thermoplastischem Schaumstoff gemäß Anspruch 1, wobei die Dichte des Schaumstoffs 725 bis 890 g/l beträgt.

9. Bahn aus thermoplastischem Schaumstoff gemäß einem der Ansprüche 1 bis 8, die mehr als eine co-extrudierte Schicht aufweist.

10. Bahn aus thermoplastischem Schaumstoff gemäß Anspruch 1, wobei die Bahn eine co-extrudierte mehrschichtige Schaumstoffbahn ist, die eine Schaumstoffschicht und mindestens eine Nichtschaumstoff-Polymerhautschicht beinhaltet.

11. Co-extrudierte mehrschichtige Schaumstoffbahn gemäß Anspruch 10, wobei die Schaumstoffschicht geschäumtes Polystyrol beinhaltet und die Nichtschaumstoff-Polymerhautschicht ein Gemisch aus einem Polystyrolharz mit einem schlagzähen Polystyrolharz beinhaltet.

12. Ein thermogeformter Artikel, der aus der Schaumstoffbahn gemäß einem der Ansprüche 8 bis 11 hergestellt ist.

## Revendications

1. Une feuille de mousse thermoplastique pouvant être obtenue :
en mettant un polymère de monovinylidène aromatique ou oléfinique fondu en contact avec un agent gonflant physique sélectionné parmi le dioxyde de carbone, l'azote, l'eau ou une combinaison de ceux-ci, afin de former un mélange polymère/agent gonflant au sein d'une ligne d'extrusion de feuilles ; en faisant mousser le mélange dans une région de plus faible pression afin de former un extrudat de moussage ; et en tirant et
comprimant l'extrudat de moussage afin de former une feuille de mousse ; la feuille de mousse ayant une masse volumique allant de 400 à 1 050 g/L et une épaisseur uniforme inférieure à 3 mm, où l'épaisseur uniforme diffère de l'épaisseur de feuille moyenne de moins de 6 pour cent en tout point.

2. La feuille de mousse thermoplastique de la revendication 1 où un polymère de monovinylidène aromatique fondu est utilisé.

3. La feuille de mousse thermoplastique de la revendication 1 où le polymère de monovinylidène aromatique fondu comprend un polymère vinyl aromatique.

4. La feuille de mousse thermoplastique de la revendication 1 où un polymère oléfinique fondu est utilisé.

5. La feuille de mousse thermoplastique de la revendication 3 ou de la revendication 4 où le polymère oléfinique fondu comprend un polyéthylène, un polypropylène, un polyéthylène basse densité linéaire, un polyéthylène basse densité, un polyéthylène haute densité, un copolymère d'éthylène-octène, ou un copolymère ou interpolymère oléfinique ayant au moins 70 pour cent en poids de monomère vinyl aromatique incorporé dans la résine finale comme unités de répétition monomères.

6. La feuille de mousse thermoplastique de la revendication 5 où le polymère oléfinique fondu comprend du polypropylène.

7. La feuille de mousse thermoplastique de la revendication 5 où le polymère oléfinique fondu comprend du polyéthylène.

8. La feuille de mousse thermoplastique de la revendication 1 où la masse volumique de la mousse va de 725 à 890 g/L.

9. La feuille de mousse thermoplastique de l'une quelconque des revendications 1 à 8 présentant plus d'une couche coextrudée.

10. La feuille de mousse thermoplastique de la revendication 1, où la feuille est une feuille de mousse multicouche coextrudée comprenant une couche de mousse et au moins une couche de peau polymère non-mousse.

11. La feuille de mousse multicouche coextrudée de la revendication 10, où la couche de mousse comprend du polystyrène expansé et la couche de peau polymère non-mousse comprend un mélange homogène d'une résine de polystyrène avec une résine de polystyrène choc.

12. Un article thermoformé produit à partir de la feuille de mousse de l'une quelconque des revendications 8 à 11.
